# EUROPEAN PATENT APPLICATION

(11) **EP 2 287 622 A1**
(43) Date of publication of application: **23.02.2011**
(21) Application number: 10005455.0
(22) Date of filing: 26.05.2010
(51) Int. Cl.: G01N 35/04, B08B 9/08

(54) **Sample processing apparatus and sample processing method**

(30) Priority: 18.08.2009 JP 2009189266; 02.10.2009 JP 2009230740
(71) Applicant: Aoi Seiki Co., Ltd, Kumamoto-shi Kumamoto-ken (JP)
(72) Inventor: Itoh, Teruaki, Kumamoto-shi Kumamoto-ken (JP)
(74) Representative: Plöger, Jan Manfred

(57) **Abstract**

Sample processing apparatus including, a processing unit (50) configured to subject a sample container (25) or a sample contained in the sample container (25) to processing, and a label removal unit (40) configured to remove at least part of a label affixed to a side part of the sample container (25) prior to the processing.

## Description

The present invention relates to a sample processing apparatus and sample processing method.

As a sample processing apparatus configured to carry out processing of various blood tests such as a biochemical analysis and the like, an analysis equipment configured to extract a blood serum from blood acquired by blood drawing through a centrifugal separation process as a sample, and carry out analysis processing by infusing a reagent into the sample to detect the reaction is known (for example, Jpn. Pat. Appln. KOKAI Publication No. 2008-76185). When a sample contained in a sample container is subjected to processing, it is required to inspect/observe the state of the sample or the inside of the sample container in some cases. For example, when a blood serum which is the sample is in the chylaceous or laky state, the state of the sample is detected in advance by visual observation or the like before subjecting the sample to analysis processing, or is detected by the analysis equipment after the analysis processing is carried out.

However, there is the following problem with the above technique. That is, a label indicating the identification information or the like is attached to the side surface of the sample container in some cases and, in such cases, detection from the lateral position is made difficult, and hence there is a problem that it is difficult to maintain a high degree of detection accuracy. In consideration of such circumstances, for example, a method of subdividing the sample in the sample container to detect the state of the sample is conceivable. However, this method involves a problem that the processing efficiency is reduced.

Thus, an object of the present invention is to provide a sample processing apparatus and sample processing method capable of detecting the state of a sample or the inside of a sample container with a high degree of accuracy and efficiency.

According to one embodiment, a sample processing apparatus comprising, a processing unit configured to subject a sample container or a sample contained in the sample container to processing, and a label removal unit configured to remove at least part of a label affixed to a side part of the sample container prior to the processing.

According to another embodiment, the processing unit is a detection unit configured to detect the inside state of the sample or the sample container from a lateral position of the sample container containing the sample therein.

According to another embodiment, a detection object of the detection unit is a liquid surface position of at least any one of a sample, blood serum, silicon, and blood clot.

According to another embodiment, the detection unit comprises an image detection unit configured to detect image information on the sample from a lateral position of the sample container containing the sample therein, and a determination unit configured to determine the chylaceous state or the laky state of the sample from a color of the sample on the basis of the detected image information, and the label separation unit peels off at least part of the label affixed to the side part of the sample container prior to detecting the image information.

According to another embodiment, the label removal unit comprises an ultrasonic vibration unit configured to apply ultrasonic vibration to the adhesive part of the label on the side part of the sample container, and a scraping section configured to scrape off the label.

According to another embodiment, the label removal unit comprises a heating section configured to heat the label bonded to the side part of the sample container, a cutter configured to cut a part to be separated of the label, and a scraping section configured to scrape off the label.

According to another embodiment, the label removal unit comprises a scraping edge configured to scrape off the label by being moved in a state where the scraping edge is in contact with the side part of the sample container.

According to another embodiment, the sample processing apparatus further comprises a transfer unit configured to transfer the sample container along a predetermined transfer path while holding the sample container in an upright position, wherein a read unit configured to read information of the label, the label removal unit, the detection unit, and an analysis unit configured to carry out analysis processing of analyzing the sample by reacting the sample with a reagent are provided in the order mentioned from the upstream side of the transfer path toward the downstream side thereof.

According to another embodiment, a sample processing method comprises detecting image information on a sample from a lateral position of a sample-container containing the sample therein, detecting a chylaceous state or a laky state of the sample from a color of the sample on the basis of the detected image information, and separating at least part of a label arranged on a side part of the sample container from the container prior to detecting the image information.

The invention can be more fully understood from the following detailed description when taken in conjunction with the accompanying drawings, in which:
FIG. 1 is a plan view of a chyle/laky blood sample detection apparatus according to a first embodiment of the present invention.
FIG. 2 is a front view showing the chyle/laky blood sample detection apparatus according to the first embodiment by partially cutting away the apparatus.
FIG. 3A is a side view of a label separation unit according to the first embodiment.
FIG. 3B is a side view showing the label separation unit by enlarging part of FIG. 3A.
FIG. 4A is a side view showing a test tube before being subjected to label separation processing according to the first embodiment.
FIG. 4B is a side view showing the test tube after being subjected to the label separation processing according to the first embodiment.
FIG. 4C is a side view showing a test tube a label of which is partially separated from the test tube in the label separation processing according to the first embodiment.
FIG. 5 is an explanatory view showing the chyle/laky blood sample detection processing according to the first embodiment.
FIG. 6 is a plan view of a sample processing unit according to the first embodiment.
FIG. 7 is an explanatory view showing the sample processing operations according to the first embodiment.
FIG. 8 is a side view of a label separation unit of a chyle/laky blood sample detection apparatus according to a second embodiment of the present invention.
FIG. 9A is a plan view of a scraping section of the label separation unit according to the second embodiment.
FIG. 9B is a plan view of a heating section of the label separation unit according to the second embodiment.
FIG. 9C is a plan view of a cutter of the label separation unit according to the second embodiment.
FIG. 10 is a plan view of a label separation unit of a sample processing apparatus according to a third embodiment of the present invention.
FIG. 11 is a side view of the label separation unit of the sample processing apparatus according to the third embodiment of the present invention.
FIG. 12 is an explanatory view of a sample processing apparatus according to a fourth embodiment of the present invention.

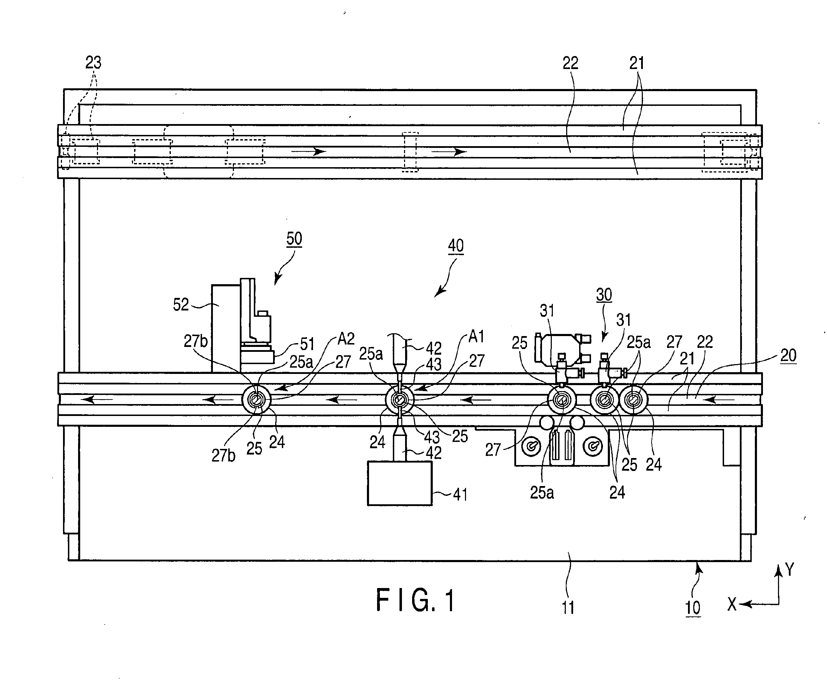

A chyle/laky blood sample detection apparatus 10 (sample processing apparatus) as a sample processing apparatus according to an embodiment of the present invention will be described below with reference to FIGS. 1 to 4. It should be noted that in each of FIGS. 1 to 4, the configuration is shown by appropriately enlarging, reducing, or abbreviating the drawing. Arrows X, Y, and Z in each of FIGS. 1 to 4, respectively show three directions perpendicular to each other. It should be noted that here the case where the X-, Y-, and Z-axes are set in the direction of the transfer path, width direction of the transfer path, and vertical direction, respectively, is shown.

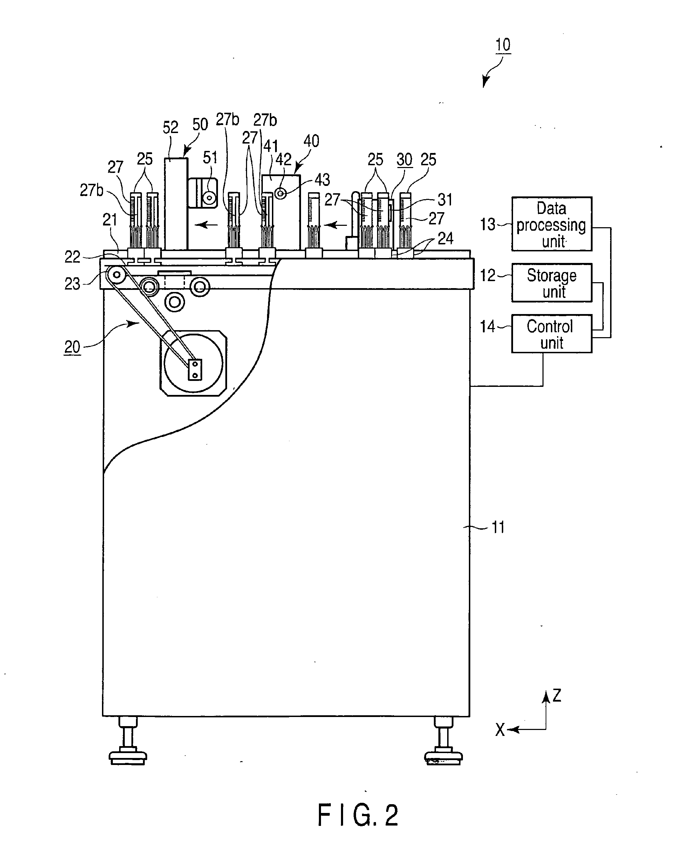

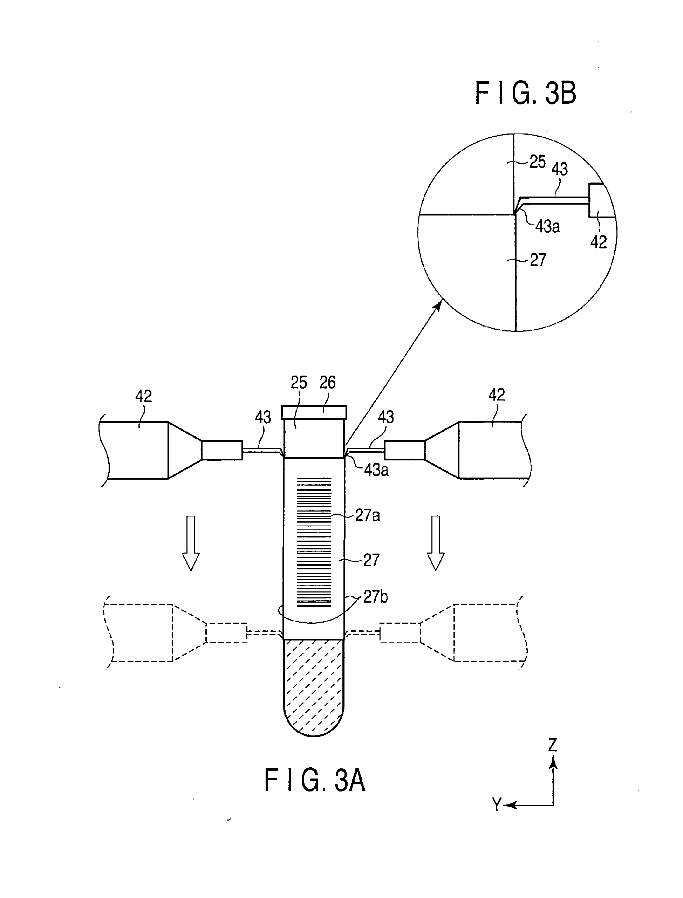

FIG. 1 is a plan view schematically showing the chyle/laky blood sample detection apparatus 10 according to this embodiment, FIG. 2 is a front view schematically showing the chyle/laky blood sample detection apparatus 10 by partially cutting away the apparatus, and FIG. 3 is a side view schematically showing a label separation unit 40.

The chyle/laky blood sample detection apparatus 10 is an apparatus configured to detect in advance, prior to the analysis processing of the sample, the chylaceous state or the laky state of the sample, and is used as, for example, one of pretreatment units of the sample processing apparatus configured to carry out analysis processing of the sample.

The chyle/laky blood sample detection apparatus 10 is constituted of an apparatus main body 11, transfer unit 20 configured to transfer a test tube (sample container) 25 along a predetermined transfer path 20a, reading unit 30 configured to read identification information of a label 27 attached to the test tube 25, label separation unit 40 (label removal unit) configured to separate part of the label attached to the side part of the test tube 25 from the test tube, chyle/laky blood sample detection unit (detection unit/processing unit) 50 configured to detect the chylaceous state or the laky state of the sample, storage unit 12 configured to store therein various information items, data processing unit 13 configured to carry out data processing such as calculation/determination and the like on the basis of a detection result or identification information, and control unit 14 configured to control an operation of each unit.

As shown in FIGS. 1 and 2, the transfer unit 20 is a conveyor type holder transfer mechanism provided at an upper part of the apparatus main body 11, and is constituted of a pair of guide rails 21 provided along a transfer path 20a extending in the X-axis direction with a given width, transfer belt 22 arranged between the guide rails 21 along the transfer path 20a, and transfer rollers 23 configured to drive the transfer belt 22 on the back side of the transfer belt 22 by rotary drive.

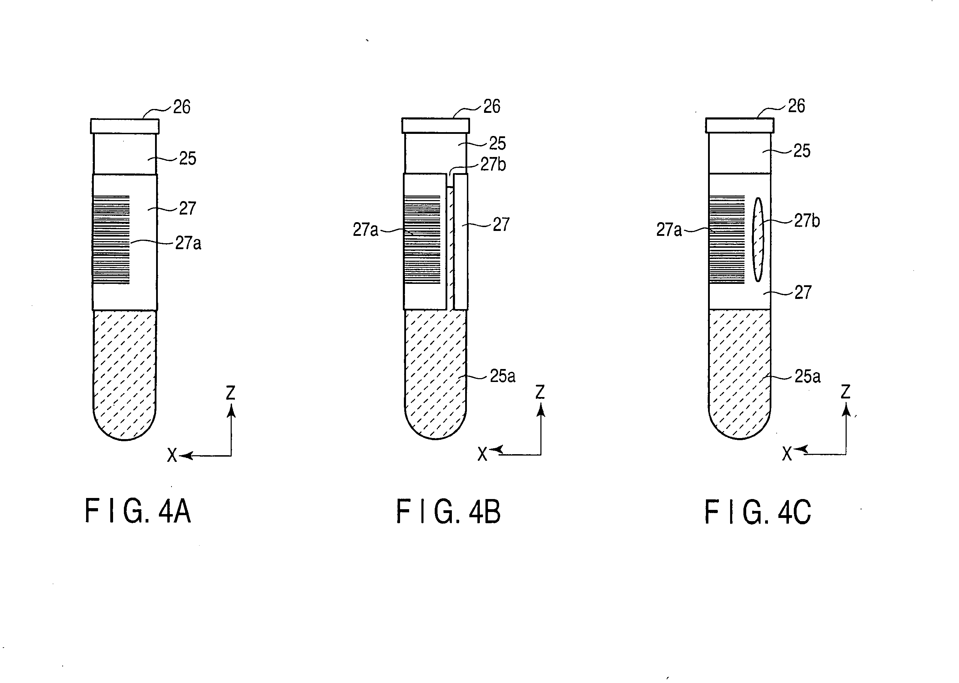

A holder 24 configured to hold a test tube 25 is fitted into a part between the pair of guide rails 21 to be held in an upright position, and is transferred with the movement of the transfer belt 22. As shown in FIG. 4A, the test tube 25 serving as a sample container configured to contain therein the sample is constituted of transparent glass or the like, and is formed into a cylindrical shape with an inner cylindrical space in which the sample is to be contained. A label 27 is affixed to an outer circumferential side surface of the test tube 25 by adhesion through an adhesive layer constituted of an adhesive. On the label 27, a barcode 27a is shown as an identification information indication section indicating various information items such as identification information and the like of the sample 25a.

As shown in FIGS. 1 and 2, the reading unit 30 is provided with a plurality of read units 31 provided at a lateral position of the transfer path 20a, and configured to read the barcode 27a of the label 27 affixed to the side surface of the test tube 25 transferred by the transfer unit 20 to thereby acquire various information items on the sample. The read unit 31 detects, for example, positional information on the barcode 27a, and information on presence/absence of the label 27 in addition to the identification information on the sample 25a shown on the barcode 27a. The various information items acquired by the read unit 31 are recorded on the storage unit 12, and are used for control of the control unit 14.

The label separation unit 40 shown in FIGS. 1 to 3 is constituted of a base section 41 provided at a lateral position of the transfer path 20a, a pair of arm sections 42 extending from the base section 41 toward the transfer path 20a, and movably supported on the base section 41, and a pair of scraping plates 43 (scraping section) each of which is provided at a distal end of each of the pair of arm sections 42, and configured to scrape off the label 27.

The base section 41 movably supports the arm section 42, and functions as an ultrasonic vibration unit configured to apply ultrasonic vibration to the adhesive part of the label 27 through the arm section 42 and scraping plate 43.

The pair of arm sections 42 is provided at positions opposed to each other, and extends from both the lateral positions of the transfer path 20a toward the transfer path 20a. The scraping plate 43 is provided at the distal end of the arm section 42. The scraping plate 43 is constituted of a plate-like member having a predetermined width and length, and a distal end part 43a thereof is downwardly bent, and is tapered in such a manner that the thickness thereof becomes less toward the tip end side. The distal end part 43a formed sharp when viewed laterally is downwardly moved in a state where the distal end part 43a is in contact with the label 27, whereby the label 27 is scraped off and is separated from the test tube 25.

When the test tube 25 transferred along the transfer path 20a, and is stopped at a predetermined separation area A1, the base section 41 is driven in accordance with the control of the control unit 14 on the basis of the positional information on the barcode 27a, information on the presence/absence of the label 27, and the like acquired by the read unit 31, and the separation processing is carried out. The separation processing is carried out when the test tube 25 which is an object of the processing has a label affixed thereto.

As the separation processing, first, the base section 41 moves the arm section 42 and scraping plate 43, and carries out positioning of the distal end part 43a in such a manner that the distal end part 43a comes into contact with an upper end of the part to be separated, the upper end being at a position away from the information indication part such as the barcode 27a and printed part of the label 27. Further, in the state where the distal end part 43a of the scraping plate 43 is in contact with the surface of the label 27 or the outer side surface of the test tube 25, the base section 41 downwardly moves the distal end part 43a of the scraping plate 43 within a movement range corresponding to the part 27b to be separated as indicated by the arrows in FIG. 3 while applying ultrasonic vibration to the distal end part 43a. Then, within the movement range, the adhesive layer which is the adhesive part of the label 27 is broken by the ultrasonic vibration, or the adhesive strength of the adhesive layer is reduced, the part of the label 27 is scraped off by the scraping plate 43, and is separated from the test tube 25.

The movement range (part to be separated) may be set over the entire length of the label 27 in the vertical direction, or may be partially set along the length of the label 27. FIG. 4A shows the test tube 25 viewed laterally before separation of the label 27, FIG. 4B shows the test tube 25 of a case where the label 27 is scraped off over the entire length of the label 27 in the vertical direction, viewed laterally, and FIG. 4C shows the test tube 25 of a case where only a part in the middle of the label 27 in the vertical direction is scraped off, viewed laterally. As shown in FIGS. 4B and 4C, after the separation processing, the side part of the test tube 25 is in a state where the label 27 is scraped off in the part 27b to be separated extending in the vertical direction, and the transparent inner side part of the test tube 25 is exposed.

The chyle/laky blood sample detection unit 50 is constituted of an imaging unit 51 (image detection unit) provided at a lateral position of the transfer path 20a on the downstream side of the label separation unit 40, and configured to image the side part of the test tube 25 and acquire the image information of the sample, and support mechanism 52 configured to support the imaging unit 51.

The imaging unit 51 (image detection unit) is constituted of an image sensor such as a camera or the like, and is provided at a lateral position of the transfer path 20a. The imaging unit 51 images the side surface of the sample 25a from a lateral position of the test tube 25 held on the transfer path 20a in an upright position to acquire the image information. The acquired image information is recorded on the storage unit 12, and is sent to the data processing unit 13.

It should be noted that the label 27 on the side part of the test tube 25 to be sent to the imaging unit 51 is previously scraped off at the label separation unit 40 on the upstream side, further the sidewall of the transparent test tube 25 is exposed as shown in FIG. 4B or FIG. 4C, and hence it is possible to acquire color information on the inside sample 25a from the lateral position through the sidewall of the transparent test tube 25.

The data processing unit 13 (determination unit) detects the color of the sample 25a on the basis of the image information acquired by the imaging unit 51, and determines (detects) the state of the sample 25a. At this time, data processing is carried out in correlation with the identification information on the sample 25a acquired by the reading unit 30. Here, as an example, the case where the color of the sample is yellow is set as a normal state, and determination processing is carried out by teaching. For example, when the color of the sample is a color more reddish than the normal state, such as red, pink or orange, it is determined that the sample is in the laky state. On the other hand, when the color of the sample is a color more whitish than the normal state, such as pink or milk white, it is determined that the sample is in the chylaceous state.

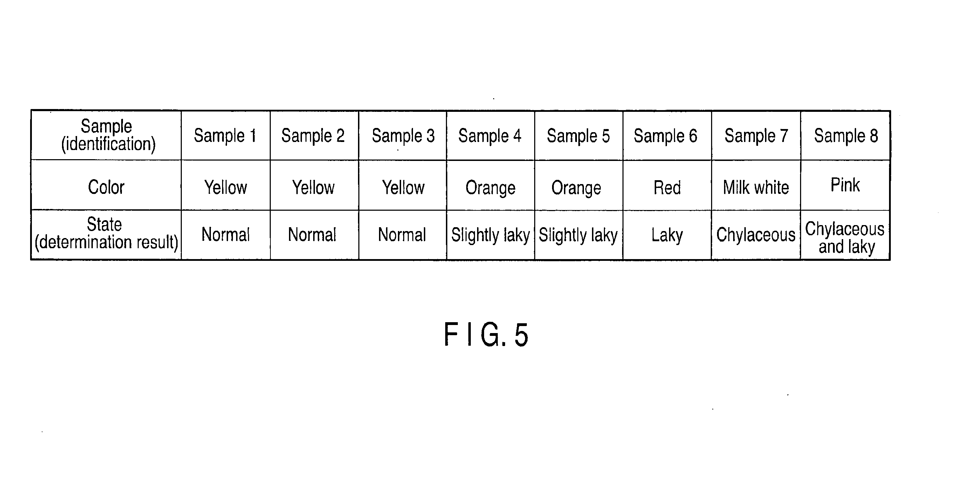

FIG. 5 shows an example of a correlation between the identification number as the sample identification information, color of the sample as the detection result, and state of the sample as the determination result. For example, in each of the cases of the samples 1 to 3 where the color is yellow, it is determined that the sample is normal, in each of the cases of the samples 4 and 5 where the color is orange, it is determined that the sample is slightly in the laky state, in the case of the sample 6 where the color is red, it is determined that the sample is in the laky state, in the case of the sample 7 where the color is milk white, it is determined that the sample is in the chylaceous state, and in the case of the sample 8 where the color is pink, it is determined that the sample is in the chylaceous and laky state. It should be noted that these detection results and determination results are recorded on the storage unit 12 in correlation with the identification information of the test tube 25 acquired in advance by the reading unit 30, and are used for the control of the control unit 14.

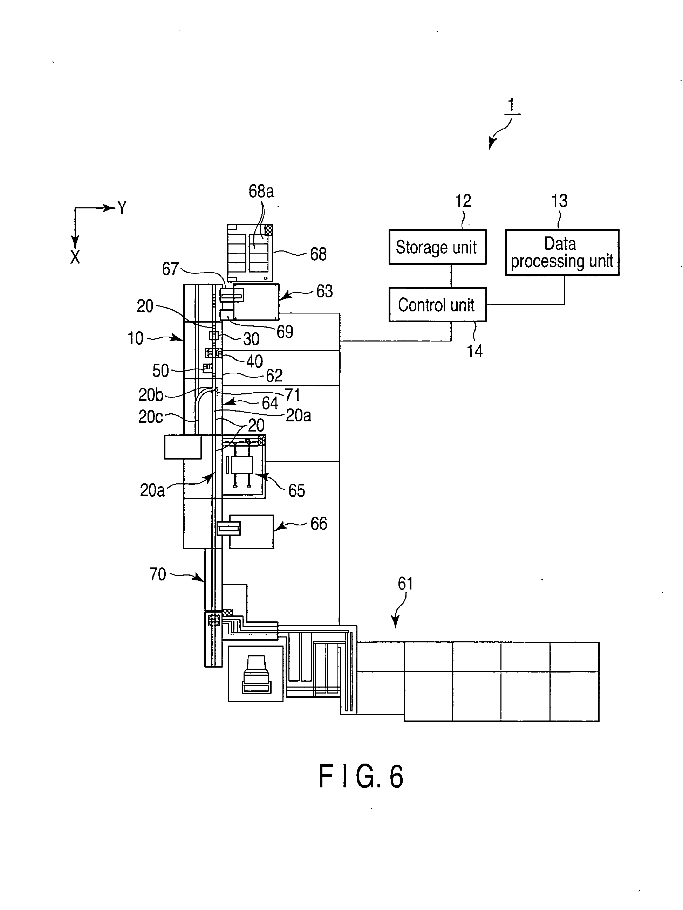

FIG. 6 shows a sample processing unit 1 (sample processing apparatus) provided with the chyle/laky blood sample detection apparatus 10 as one of pretreatment units. In the sample processing unit 1, an analysis apparatus (analysis unit) 61 configured to analyze the reaction of the transferred sample, and a pretreatment unit 62 constituted of pretreatment apparatuses (units) configured to carry out various pretreatments prior to the analysis processing are connected to each other through a coupling path 70. The storage unit 12, data processing unit 13, and control unit 14 are connected to each of the units of the sample processing unit 1.

The pretreatment unit 62 is constituted of a carry-in apparatus 63, chyle/laky blood sample detection apparatus 10, sorting apparatus (sorting unit) 64, subdivision/dispensing apparatus (subdivision/dispensing unit) 65, and carry-out apparatus 66 which are arranged in the order of processing from the upstream side toward the downstream side of the predetermined transfer path 20a. A conveyor type transfer unit 20 configured to transfer the test tube 25 is provided in each of the processing apparatuses 10, and 63 to 66, and is arranged so that the transfer path 20a of the plurality of transfer units 20 provided in the processing apparatuses 10, and 63 to 66 can be continuous with each other. The downstream side of the pretreatment unit 62 and the analysis apparatus 61 are connected to each other through the coupling path 70 continuous with the transfer path 20a.

The carry-in apparatus 63 is provided with a transfer mechanism 67 such as a robotic arm or the like. At a lateral position of the transfer path 20a, a rack installation unit 68 on which a plurality of test tube racks 68a each containing a plurality of test tubes 25 are placed is provided. On the downstream side of the transfer mechanism 67 of the carry-in apparatus, a cap removal unit 69 is provided. The cap removal unit 69 carries out uncorking processing of removing a cap 26 inserted in an opening at an upper part of the test tube 25.

The sorting apparatus 64 is provided with a transfer unit 20 configured to transfer the holder 24, and a gate unit 71 serving as a guide unit configured to guide the holder 24 into the transfer direction in accordance with the control of the control unit 14. In the middle of the transfer path 20a, a branching unit 20b is provided, and a branch path 20c branching off from the transfer path 20a to constitute a different path is provided. The gate unit 71 carries out a switching operation to distribute a test tube 25 judged to be in the chylaceous or laky state to the branch path 20c. For example, a test tube 25 containing a sample 25a which has been judged to be in the chylaceous state or in the laky state in the data processing unit 13 is guided to the branch path 20c, and a test tube 25 containing a normal sample which is neither in the chylaceous state nor in the laky state is guided in such a manner that the test tube 25 is sent to the subdivision/dispensing apparatus 65 on the downstream side along the transfer path 20a.

The subdivision/dispensing apparatus 65 is provided with a transfer unit 20 configured to transfer the holder 24 along the transfer path 20a, and a vertically movable subdivision/dispensing chip arranged in opposition to the opening of the test tube 25. When a test tube 25 containing a sample is arranged and stopped at a predetermined position on the transfer path 20a, a predetermined amount of the blood serum is portioned out from the test tube 25 containing the sample, and is put into a separately sent sample cup by the subdivision/dispensing chip. The sample cup in which the distributed amount of the blood serum is contained is carried out from the carry-out apparatus 66, and is carried into the analysis apparatus 61 through the coupling path 70 on the downstream side, where the blood serum is subjected to analysis processing.

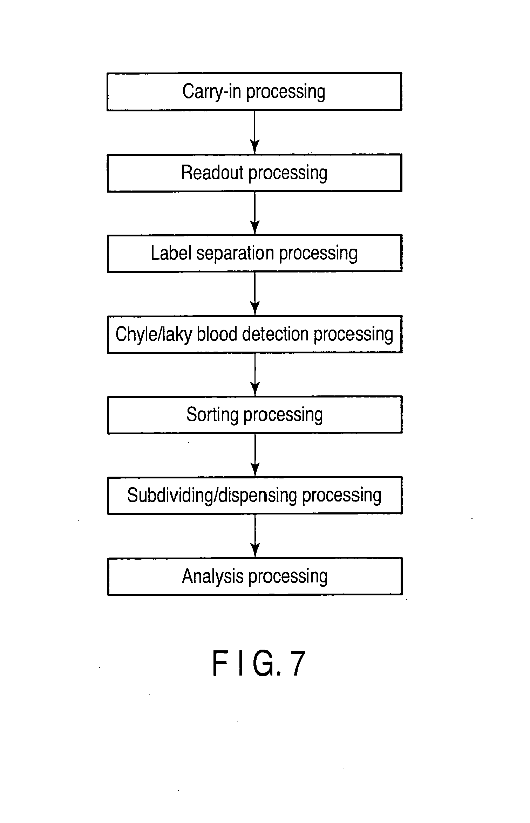

The processing procedure in the sample processing unit 1 will be described below with reference to FIG. 7. FIG. 7 shows the overall processing flow of the sample processing unit 1. First, by the carry-in apparatus 63 provided on the upstream side, carry-in processing of holding the test tube 25 containing the sample and stored in the test tube rack 68a by using the transfer mechanism 67, and transferring the test tube 25 onto the transfer path 20a is carried out. The holder 24 is on standby on the transfer path 20a, and the test tube 25 is set on the holder 24. The transferred test tube 25 is sent to the reading unit 30 of the chyle/laky blood sample detection apparatus 10 provided on the downstream side along the transfer path 20a in the state where the test tube 25 is held on the holder 24.

At the reading unit 30, read processing of acquiring various information items such as the identification information shown by the barcode 27a written on the label 27 affixed to the side surface of the test tube 25, positional information on the barcode 27a, and the like is carried out. The acquired information is recorded on the storage unit 12. The test tube 25 which has already been subjected to the read processing is sent to the label separation unit 40 on the downstream side along the transfer path 20a.

At the label separation unit 40, the label 27 affixed to the side surface of the test tube 25 is separated from the test tube. First, the base section 41 positions the scraping plate 43 in such a manner that the distal end part 43a comes into contact with the upper end of the part to be separated, the upper end being at a position away from the information indication part such as the barcode 27a and printed part of the label 27, and then downwardly moves the scraping plate 43 while applying ultrasonic vibration to the distal end part 43a. Then, within the movement range, the adhesive layer is broken by the ultrasonic vibration, or the adhesive strength of the adhesive layer is reduced, and the part of the label 27 is scraped off by the scraping plate 43. By the processing described above, the label 27 is separated from the test tube 25 in the predetermined part to be separated, and the test tube 25 is exposed. The test tube 25 for which the separation processing has been finished is sent to the chyle/laky blood sample detection unit 50 on the downstream side along the transfer path 20a.

When the holder 24 holding the test tube 25 is transferred to the chyle/laky blood sample detection unit 50, and is set at a detection processing area A2 opposed to the imaging unit 51, the image of the side part of the test tube 25 is taken by the imaging unit 51 positioned at the lateral position, and the image information is acquired. The acquired image information is recorded on the storage unit 12, and is sent to the data processing unit 13.

The data processing unit 13 calculates data indicating the color of the sample from the acquired image information, and carries out determination as to whether or not the sample is in the chylaceous state on the basis of the color of the sample. For example, when the color of the sample indicates a value more whitish than a predetermined range indicating the color of the normal blood serum, it is determined that the sample is in the chylaceous state, and when the color indicates the color of the normal blood serum, it is determined that the sample is in the normal state.

Furthermore, the data processing unit 13 carries out determination as to whether or not the sample is in the laky state on the basis of the color of the sample. When the color of the sample indicates a value more reddish than a predetermined range indicating the color of the normal blood serum, it is determined that the sample is in the laky state, and when the color indicates the color of the normal blood serum, it is determined that the sample is in the normal state. The detection result and determination result acquired by the data processing unit 13 are recorded on the storage unit 12 in correlation with the identification information of the test tube 25 acquired in advance by the reading unit 30, and the processing operations to be carried out thereafter are controlled on the basis of the determination result.

As an example of the operation control, in the sorting apparatus 64 provided on the downstream side, the processing of switching the gate unit 71, and distributing the test tube 25 is carried out in accordance with the determination result by the control of the control unit 14. For example, a test tube 25 containing a sample 25a which has been judged to be in the chylaceous state or in the laky state in the data processing unit 13 is guided to the branch path 20c by switching of the gate unit 71. The downstream side of the branch path 20c is continuous with a processing unit configured to carry out a process for the sample in the chylaceous or laky state, and different from that of the normal sample. On the other hand, the normal sample which is neither in the chylaceous state nor in the laky state is guided to the subdivision/dispensing apparatus 65 on the downstream side along the transfer path 20a.

In the subdivision/dispensing apparatus 65, subdivision/dispensing processing of portioning out a predetermined amount of blood serum from the test tube 25 containing a normal sample, and putting the blood serum into a separately sent sample cup is carried out. The sample cup in which the distributed amount of the blood serum is contained is carried out from the carry-out apparatus 66 on the downstream side, and is carried into the analysis apparatus 61 through the coupling path 70 on the downstream side. Further, the blood serum is subjected to analysis processing configured to inspect various reactions in the analysis apparatus 61.

According to the chyle/laky blood sample detection apparatus 10, and sample processing unit 1 associated with this embodiment, the following advantages are obtained. That is, the label separation unit 40 is provided on the upstream side of the imaging unit 51, and the label on the side part of the test tube 25 is separated in advance from the test tube 25, whereby it is possible to securely acquire the image information on the sample from the lateral position, and maintain a high degree of detection accuracy.

Further, not the entire label 27 is separated from the test tube, but only the part to be separated is separated, and hence it is possible to shorten the processing time. The part to be separated is set at a position away from the information indication part such as the barcode 27a and printed part, whereby it is possible to enable image detection in the subsequent processing without impairing the information indication such as the barcode 27a and the like. Further, the part to be separated is set in the vertical direction, whereby the processing can be applied to the test tube without being limited by the amount of the sample. In the processing of scraping off the label 27, the adhesive strength is reduced by ultrasonic vibration, and hence it is possible to improve the accuracy and efficiency of the separation processing.

Furthermore, in this embodiment, detection of a chyle/laky blood sample is automatically carried out by using the chyle/laky blood sample detection apparatus 10, prior to the analysis processing, and hence it is possible to detect the state of the sample with a high degree of accuracy and efficiency. Accordingly, the burden to the operator is smaller, and a higher degree of detection accuracy can be maintained as compared with the method of visually carrying out inspection by the operator. Further, it is possible to carry out processing at high speed for a large number of samples, and thus the processing efficiency is excellent. Furthermore, the chylaceous/laky state is detected before the sample reacts with the reagent, further it is not necessary to retry the analysis processing unlike the method of detecting the blood state after the sample has reacted with the reagent, and hence it is possible to prevent the processing and reagent from being uselessly lost.

### [Second embodiment]

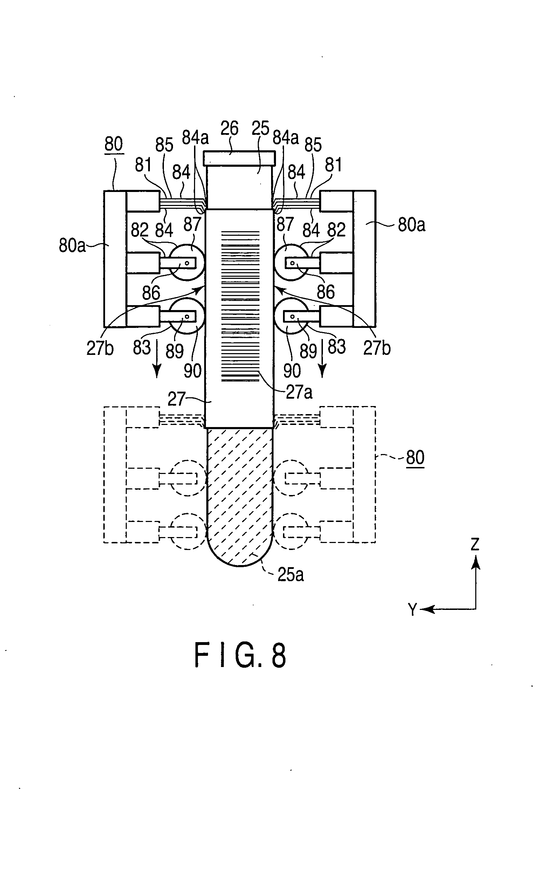

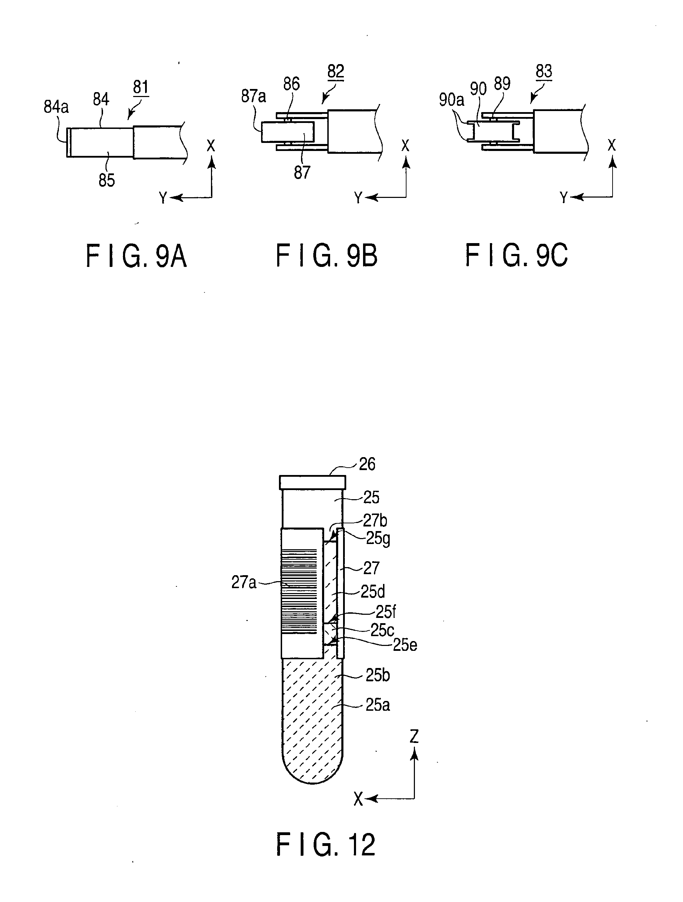

A chyle/laky blood sample detection apparatus 10 according to a second embodiment of the present invention will be described below with reference to FIGS. 8 and 9. It should be noted that in this embodiment, the configurations other than the configuration of a label separation unit 80 are identical with the first embodiment, and hence a description of them will be omitted. FIG. 9A shows a plan view of a scraping section 81, FIG. 9B shows a plan view of a heating section 82, and FIG. 9C shows a plan view of a cutter 83.

The label separation unit 80 according to this embodiment is, as shown in FIG. 8, provided with a pair of support sections 80a provided vertically movable at both lateral positions of the transfer path 20a, a pair of scraping sections 81 supported at both upper parts of the support sections 80a, a pair of heating sections 82 supported at middle parts of the support sections 80a in the vertical direction of the sections 80a, and configured to heat the label, and a pair of cutters 83 supported at both lower parts of the support sections 80a, and each configured to make an incision at the boundary of the part 27b to be separated of the label 27. The pair of heating sections 82, and the pair of cutters 83 are integrally attached to the support sections 80a in parallel to each other in the vertical direction. The scraping section 81 includes a pincers section 85 in which two scraping plates 84 and 84 are duplicately arranged with a predetermined gap held between them. Each of the scraping plates 84 and 84 is constituted of a plate-like member having a predetermined width and length, and a distal end part 84a thereof is downwardly bent, and is tapered in such a manner that the thickness thereof becomes less toward the tip end side. The upper side scraping plate 84 is arranged in contact with the side part of the test tube 25 at the distal end part 84a thereof, and the lower side scraping plate 84 is arranged in such a manner that the distal end part 84a thereof is slightly retracted from the side part of the test tube 25. In the scraping process, the distal end part 84a of the upper side scraping plate 84 formed sharp when viewed laterally is downwardly moved in a state where the distal end part 84a is in contact with the label 27, whereby the label 27 is scraped off and is separated from the test tube 25. Further, the label 27 is tweezed by the two scraping plates 84 and 84, whereby the label 27 is peeled off the test tube.

The heating section 82 includes a heating roller 87 supported on the support section 80a rotatable around a rotational axis 86 extending in the X-direction. The outer circumferential surface 87a of the heating roller 87 is set at a high temperature. In the heating process, concomitant with the downward movement of the support section 80a in a state where the outer circumferential surface 87a is in contact with the label of the part to be separated, the rotating heating roller 87 is downwardly moved along the surface of the label 27 to heat the label 27, whereby the adhesive adhering the label to the test tube is melted, and it is made easy to peel off the label 27.

The cutter 83 includes a cut roller 90 supported on the support section 80a rotatable around a rotational axis 89 extending in the X-direction. In the cutting process, the rotating cut roller 90 is downwardly moved along the surface of the label 27 to cut the label 27 in a state where two cutting edges 90a protruding from the outer circumferential surface of the cut roller 90 are pressed against the surface of the label 27, whereby an incision is made in the label at each boundary between the part 27b to be separated and part other than the part 27b to be separated, and it is made easy to peel off the part to be separated in the subsequent scraping process.

In the label separation unit 80, when the support section 80a is downwardly moved, the cutter 83, heating section 82, and scraping section 81 which are integrally supported on the support section 80a are downwardly moved while passing in sequence the surface of the part to be separated of the label 27 on the side part of the test tube 25, thereby subjecting the label 27 in sequence to the cutting processing, heating processing, and scraping processing.

In this embodiment too, the same advantage as the first embodiment can be obtained. Further, in addition to the operation of the scraping section 81, the adhesive strength of the adhesive layer is reduced by heating the label by means of the heating section 82, and hence it is possible to improve the accuracy and efficiency of the separation processing. Furthermore, by making an incision by using the cutter 83, it is possible to make it easy to scrape off the part 27b to be separated.

### [Third embodiment]

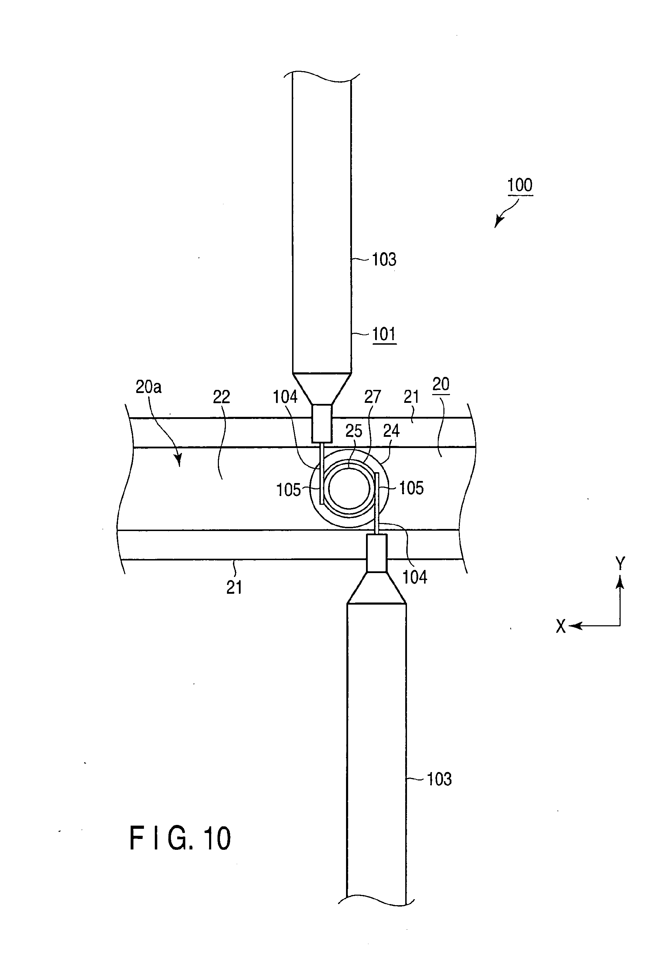

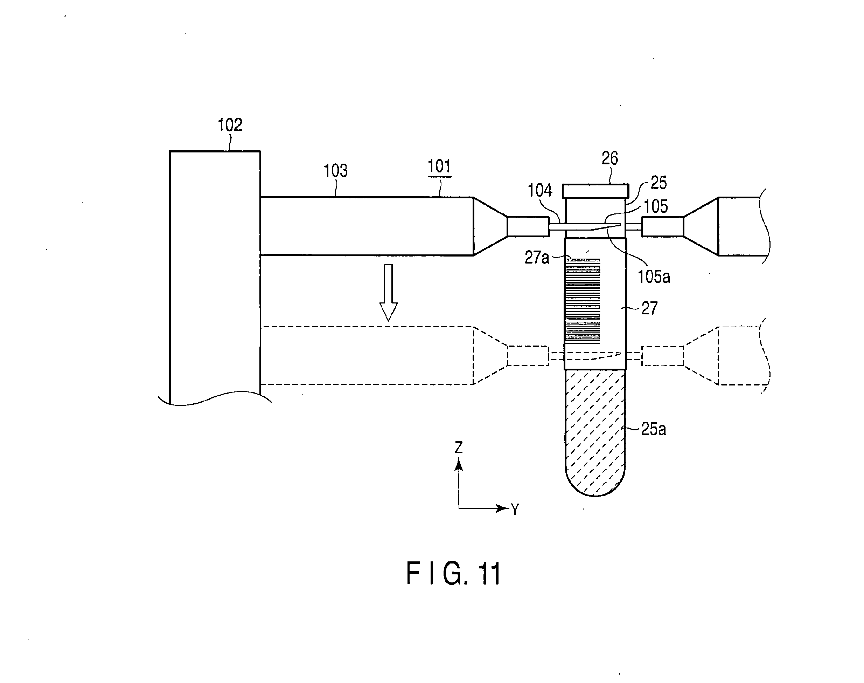

A sample processing apparatus 10 according to a third embodiment of the present invention will be described below with reference to FIGS. 10 and 11. It should be noted that in this embodiment, the configurations other than the configuration of a label separation unit 100 are identical with the first embodiment, and hence a description of them will be omitted. FIG. 10 shows a plan view of a scraping section 101, and FIG. 11 shows a side view of the scraping section 101.

The label separation unit 100 according to this embodiment is, as shown in FIGS. 10 and 11, provided with a pair of support sections 102 provided vertically movable at both lateral positions of the transfer path 20a, a pair of arms 103 supported at upper parts of the support sections 102, and a pair of scraping edges 104 serving as scraping sections, and provided at distal ends of the pair of arms 103. The pair of scraping edges 104 including sharp end parts is movable in the vertical direction.

The scraping edge 104 has a long and thin shape with a sharp distal end part 105. The pair of scraping edges 104 is arranged in such a manner that the side part of the test tube 25 is pinched from both sides between the pair of scraping edges 104. The distal end part 105 of the scraping edge 104 is tapered in such a manner that the width thereof becomes less toward the tip end side. The undersurface of the scraping edge 104 is inclined in such a manner that the undersurface ascends toward the tip end side, and the scraping edge 104 is formed sharp when viewed laterally.

In the scraping process, the scraping edge 104 is downwardly moved in a state where a lower edge 105a of the distal end part 105 is in contact with the label 27, whereby part of the label 27 is scraped off to be separated from the test tube 25, and the label 27 is peeled off the test tube. At this time, like in the embodiment described previously, by setting a blank part away from the information indication part including the barcode 27a as the object of the separation, it is possible to maintain the function of the identification information.

In this embodiment too, the same advantage as the first embodiment can be obtained. Further, according to the scraping edge 104, it is possible to separate the label 27 from the test tube without application of the ultrasonic vibration, and hence it is possible to simplify the configuration of the scraping section.

### [Fourth embodiment]

A sample processing apparatus 10 according to a fourth embodiment of the present invention will be described below with reference to FIG. 12. It should be noted that in this embodiment, the configurations are identical with the first embodiment described previously except for the fact that the processing contents of the processing unit, and detection object are different from the first embodiment, and hence FIGS. 1 to 6 will be referred to, and a description of parts common to both the embodiments will be omitted.

The sample processing apparatus 10 according to this embodiment is, as shown in FIGS. 1 to 6, constituted of an apparatus main body 11, transfer unit 20 configured to transfer a test tube (sample container) 25 along a predetermined transfer path 20a, reading unit 30 configured to read identification information of a label 27 affixed to the test tube 25, label separation unit 40 configured to separate part of the label affixed to the side part of the test tube 25 from the test tube, detection unit (processing unit) 50 configured to detect the state of the liquid surface of the sample 25a, storage unit 12 configured to store therein various information items, data processing unit 13 configured to carry out data processing such as calculation/determination and the like on the basis of a detection result or identification information, and control unit 14 configured to control an operation of each unit. That is, in this embodiment, the detection unit 50 configured to carry out liquid surface detection is provided as a processing unit in place of a chyle/laky blood sample detection unit 50.

FIG. 12 is an explanatory view for explaining an object to be detected of the sample processing apparatus 10 according to this embodiment. In this embodiment, inside the test tube 25, three layers including a blood clot 25b, silicon (separating agent) 25c, and blood serum 25d are contained as a sample 25a. Further, as the state of the inside of the test tube 25 to be detected, a position (level) of each of the blood clot surface 25e, silicon surface 25f, and blood serum surface 25g is detected.

More specifically, on the basis of image information observed from the lateral direction of the test tube 25, and acquired by the imaging unit 51, the positions of the blood clot surface 25e, silicon surface 25f, and blood serum surface 25g of the sample 25a are detected by the data processing unit 13. That is, although in the first embodiment described previously, determination of the chylaceous/laky state is made by detecting the color information of the sample 25a, here in this embodiment, processing of detecting the liquid surface position (level) of each layer is carried out in place of the processing (chyle/laky blood detection processing of FIG. 7) of the judgment about the chylaceous/laky state.

In the sample processing apparatus 10 and sample processing method according to this embodiment, the label is separated from the test tube by the separation unit 40 provided on the upstream side, thereafter image information on the side part of the sample is acquired by the imaging unit 51 on the downstream side, and then the liquid level of each layer of the sample 25a is detected by the data processing unit 13 on the basis of the image information.

In this embodiment too, the same advantage as the first embodiment can be obtained. That is, the label 27 on the side part of the test tube 25 is peeled off in advance by the separation unit 40, and hence it becomes possible to detect the inside state of the test tube 25 with a high degree of accuracy and efficiency.

It should be noted that the present invention is not limited to the embodiments described above as they are and, in the implementation stage, the constituent elements can be modified and embodied within the scope not deviating from the gist of the invention. For example, the object to be detected is not limited to the above-mentioned examples. Further, the pretreatment apparatuses (units) constituting the pretreatment unit 62 are not limited to those described above. For example, when the upper part of a test tube 25 is closed by a cap 26, the uncorking processing may be carried out by separately arranging a cap removal unit on the upstream side of the imaging unit 51. In each of the embodiments described above, although the case where sample processing is carried out for each test tube 25 has been exemplified, the sample processing may be carried out simultaneously for a plurality of test tubes 25.

Furthermore, in each of the embodiments described above, although the case where the scraping plates 43, scraping sections 81, heating sections 82, and cutters 83 are respectively provided at both lateral positions of the transfer path 20a, and processing is carried out simultaneously at two positions symmetrical to each other has been exemplified, the configuration is not limited to this, and the present invention is applicable to a case where the arrangement and processing are carried out only on one side of the transfer path 20a.

Further, in place of the scraping plate 43 of the first embodiment, the scraping section 81 of the second embodiment may be employed and, in place of the scraping section 81 of the second embodiment, the scraping plate 43 of the first embodiment may be employed.

In the fourth embodiment described above, although the case where the detection of the liquid level is carried out by the data processing unit 13 in place of the judgment about the chylaceous/laky state of the first embodiment has been exemplified, these embodiments may be combined with each other and, for example, the detection of the liquid level may be carried out in addition to the judgment about the chylaceous/laky state.

In each of the embodiments described above, although the case where the label removal unit is provided prior to the detection processing of detecting the inside state of the sample 25a or the test tube 25 has been exemplified, the configuration is not limited to this and, for example, it is possible to provide the label removal unit prior to the processing apparatuses configured to subject the sample to various types of processing such as the subdivision/dispensing processing and the like, and carry out the label separation prior to the various types of processing.

In this case too, by separating the label on the side part of the sample container from the container prior to the various types of processing, it is possible to obtain the advantage of improving the processing accuracy.

Further, the constituent elements exemplified in the above embodiments may be deleted, and the shape, structure, material, and the like of each constituent element may be changed. By appropriately combining a plurality of constituent elements disclosed in the above embodiments, various inventions can be formed.

## Claims

1. A sample processing apparatus, **characterized by** comprising:
a processing unit (50) configured to subject a sample container (25) or a sample contained in the sample container (25) to processing; and
a label removal unit (40) configured to remove at least part of a label affixed to a side part of the sample container (25) prior to the processing.

2. The sample processing apparatus according to claim 1, **characterized in that**
the processing unit (50) is a detection unit configured to detect the inside state of the sample or the sample container (25) from a lateral position of the sample container (25) containing the sample therein.

3. The sample processing apparatus according to claim 2, **characterized in that**
a detection object of the detection unit is a liquid surface position of at least any one of a sample, blood serum, silicon, and blood clot.

4. The sample processing apparatus according to claim 2, **characterized in that**
the detection unit comprises
an image detection unit (51) configured to detect image information on the sample from a lateral position of the sample container (25) containing the sample therein; and
a determination unit configured to determine the chylaceous state or the laky state of the sample from a color of the sample on the basis of the detected image information, and
the label removal unit (40) peels off at least part of the label affixed to the side part of the sample container (25) prior to detecting the image information.

5. The sample processing apparatus according to claim 4, **characterized in that**
the label removal unit (40) comprises
an ultrasonic vibration unit (42, 43) configured to apply ultrasonic vibration to the adhesive part of the label on the side part of the sample container (25); and
a scraping section (43) configured to scrape off the label.

6. The sample processing apparatus according to any one of claims 1 to 4, **characterized in that**
the label removal unit (80) comprises
a heating section (82) configured to heat the label bonded to the side part of the sample container (25);
a cutter (83) configured to cut a part to be separated of the label; and
a scraping section (81) configured to scrape off the label.

7. The sample processing apparatus according to any one of claims 1 to 4, **characterized in that**
the label removal unit (100) comprises a scraping edge (104) configured to scrape off the label by being moved in a state where the scraping edge (104) is in contact with the side part of the sample container (25).

8. The sample processing apparatus according to any one of claims 4 to 7, **characterized by** further comprising a transfer unit (20) configured to transfer the sample container (25) along a predetermined transfer path while holding the sample container (25) in an upright position, wherein
a read unit (31) configured to read information of the label, the label removal unit (40), the detection unit (50), and an analysis unit (61) configured to carry out analysis processing of analyzing the sample by reacting the sample with a reagent are provided in the order mentioned from the upstream side of the transfer path (20a) toward the downstream side thereof.

9. A sample processing method, **characterized by** comprising:
detecting image information on a sample from a lateral position of a sample container (25) containing the sample therein;
detecting a chylaceous state or a laky state of the sample from a color of the sample on the basis of the detected image information; and
separating at least part of a label arranged on a side part of the sample container (25) from the container prior to detecting the image information.
